# EUROPEAN PATENT APPLICATION

(11) **EP 3 561 699 A1**
(43) Date of publication of application: **30.10.2019**
(21) Application number: 18305493.1
(22) Date of filing: 23.04.2018
(51) Int. Cl.: G06F 17/30

(54) **METHOD AND APPARATUS FOR DATA PROCESSING**

(71) Applicant: Ecole Nationale de l'Aviation Civile, 31400 Toulouse Cedex (FR)
(72) Inventor: CONVERSY, Stéphane, 31400 TOULOUSE (FR)
(74) Representative: Bell, Mark

(57) **Abstract**

Values in a graphical interface such as a spreadsheet can be manipulated indirectly by means of a feature whereby representative values, such as unique values are identified and presented separately. Manipulations of these representative values are then passed on to the corresponding original values.

## Description

### Field of the invention

The present invention relates to data processing, and the manipulation of structured representations of data.

### Background of the invention

As the availability of digital information has increased over recent years, parallel developments have occurred in relation to platforms for the manipulation of such data. Spreadsheets, software interface concepts such as wizards and forms, and database front-end software in general and accounting or client relations management tools in particular are all examples of such platforms.

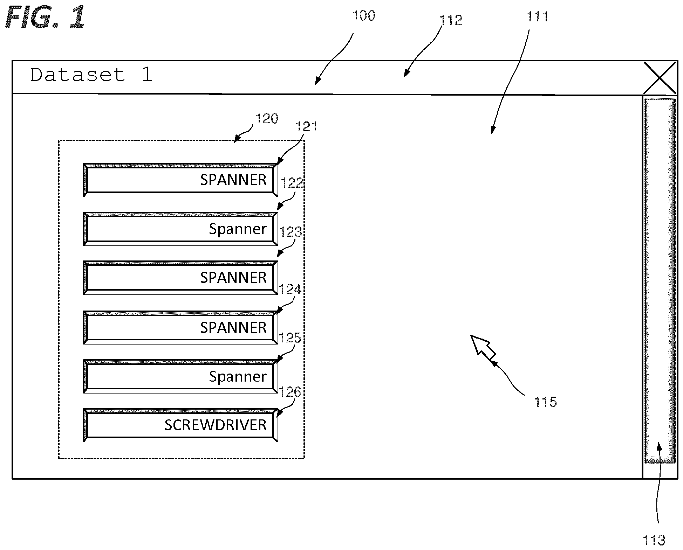

Figure 1 presents an example of such a platform as may occur in the state of the art. Specifically, as shown in figure 1, there is provided a window 100 in a graphical user interface. As shown the window 100 comprises an editing pane 111, title bar 112, slider bar 113 and pointer 115 as examples of typical GUI interface features. The editing pane 111 displays a set 120 of fields 121, 122, 123, 124, 125, 126. As shown, the fields 121, 122, 123, 124, 125, 126 comprise the respective data strings "SPANNER", "Spanner", "SPANNER", "SPANNER", "Spanner", "SCREWDRIVER". These values represent a typical data coherence issue, in that the data strings "SPANNER", "Spanner", may be assumed to reflect identical information, but due to variations in data input practices, differ in terms of the ASCII characters used to represent the information. Specifically, the same words are used in both cases, but in the first case the word has been entered entirely in upper case characters, whilst the second case has an initial capital with the remaining characters being in lower case. There exist countless possible variations in this vein due to variations in capitalisation, syntax, emphasis, spelling, terminology and so on, not including errors such as input error. Variations of this kind undermine the coherence of data, and reduce the capacity of data analytics tools and data processing methods generally to make effective use of the underlying dataset.

A discussion the manipulation of graphical objects is provided in the article entitled "Augmenting the Scope of Interactions with implicit and Explicit Graphical structures" by Raphaël Hoarau and Stéphane Conversy, CHI 2012, May 5-10 2012, Austin TX USA.

The consequences of those approximations, sometimes raising errors and/or implying a huge vast of time and strong investment in human effort in entering data through such platforms, and of reviewing, editing and correcting that data through the same or other such platforms is significant, and it is thus desirable to provide mechanisms simplifying or accelerating such activities.

### Summary of the invention

In accordance with the present invention in a first aspect there is provided a method of editing a first set of values, the method comprising the steps of, presenting one or more values in respective fields in a graphical user interface, identifying a set of representative values in the first set, the set of representative values corresponding to a surjection function of the first set, and where the representative values are selected on the basis of one or more predefined selection criteria,
presenting each representative value to a user in a respective further field in a graphical user interface,
receiving user input with respect to a selected one of the further fields corresponding to a respective representative value, and
modifying the respective field associated with each of the plurality of values corresponding to the representative value associated with the selected one of the further fields so as to apply a modification defined by the user input thereto.

In a development of the first aspect the modification comprises modifying the presentation of each respective field associated with each of the plurality of values corresponding to the representative value associated with the selected one of the further fields.

In a development of the first aspect the modification comprises highlighting each respective field associated with each of the plurality of values in the first set corresponding to the representative value associated with the selected one of the further fields.

In a development of the first aspect the user input specifies a modification to the representative value associated with the selected one of the further fields, and the step of modifying comprises modifying each respective value in the corresponding plurality of values corresponding to the selected representative value so as to apply the modification defined by the user input thereto.

In a development of the first aspect the user input comprises entering a new value to replace the selected representative value, and the modification comprises replacing each value in the plurality of values corresponding to the elected representative value with the new value.

In a development of the first aspect the user input comprises selecting a further value visible in a graphical user interface to replace the selected representative value in a user display, and associating the further value with the selected value by means of a user interface feature, and whereby the modification comprises replacing each value in the plurality of values corresponding to the selected representative value with the further value.

In a development of the first aspect the user interface feature comprises a drag and drop feature, whereby the further value is dragged to the vicinity of the selected representative value.

In a development of the first aspect the respective fields in a graphical user interface in which the one or more values are presented, or the respective further fields in a graphical user interface in which the representative values are presented are cells of a spreadsheet.

In a development of the first aspect the respective fields in a graphical user interface in which said one or more values are presented, or the respective further fields in a graphical user interface in which the representative values are presented are cells of a pivot table.

In a development of the first aspect the method comprises the further step of receiving a modification to the dataset, wherein on receiving the modification the steps of identifying each unique value in the dataset and presenting the unique values to a user are repeated.

In a development of the first aspect the values are direct representations of underlying data values in alphanumeric form.

In a development of the first aspect the values are abstract or figurative graphical representations of the underlying data values.

In accordance with the present invention in a second aspect there is provided an apparatus for editing a first set of values. The apparatus comprises an input interface, a value processor and a display interface in communication with a display, the display interface adapted under instruction from said value processor to cause the display to present one or more values in respective fields in a graphical user interface. The value processor is adapted to identify a set of representative values in the first set of values, where the set of representative values corresponds to a non injective surjection function of the first set of values, and wherein the value processor is further adapted to select the representative values on the basis of one or more predefined selection criteria, and to provide the representative values to the display interface for presentation to a user in a respective further field in a graphical user interface. The input interface is adapted to receive user input with respect to a selected one of the further fields corresponding to a respective representative value, and to provide this user input to the value processor. The value processor is further adapted to modify the respective fields associated with each of the plurality of values in the first set corresponding to the representative value associated with the selected one of the further fields so as to apply a modification defined by the user input thereto, for display by the display Interface.

In accordance with the present invention in a third aspect there is provided computer program comprising instructions adapted to implement the steps of the second aspect.

### Brief Description of the Drawings

The above and other advantages of the present invention will now be described with reference to the accompanying drawings, for illustration purposes only, in which:
Figure 1 presents such a platform as may occur in the state of the art;
Figure 2 presents a method of editing a first set of values in accordance with an embodiment;
Figure 3 shows one example of elements of a graphical user interface showing elements of certain embodiments in a first phase;
Figure 4 shows one example of elements of a graphical user interface showing elements of certain embodiments in a second phase;
Figure 5 shows one example of elements of a graphical user interface showing elements of certain further embodiments in a second phase;
Figure 6 shows one example of elements of a graphical user interface showing elements of certain further embodiments in a second phase;
Figure 7 shows one example of elements of a graphical user interface showing elements of certain further embodiments in a first phase;
Figure 8 presents an apparatus for editing a first set of values in accordance with an embodiment;
Figure 9 shows a generic computing system suitable for implementation of embodiments of the invention; and
Figure 10 shows a smartphone device adaptable to constitute an embodiment.

### Detailed description

In accordance with certain embodiments, there is provided a method of editing a first set of values, for example in a context such as that described above with respect to the background of the invention.

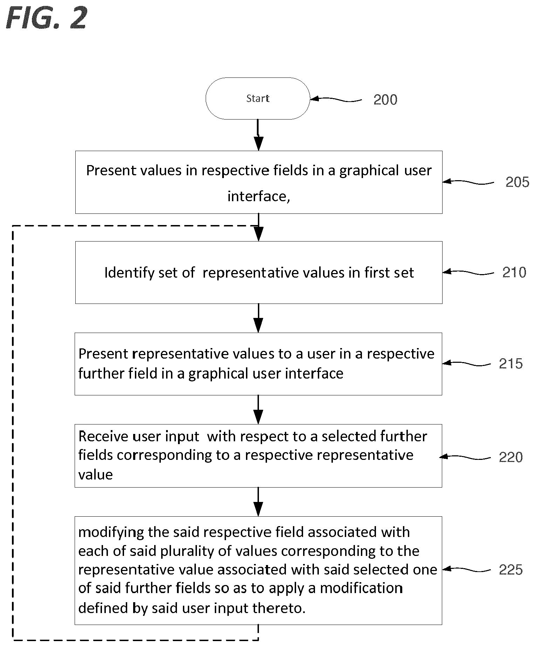

Figure 2 presents a method of editing a first set of values in accordance with an embodiment.

As shown in figure 2, the method begins at step 200 before proceeding to step 205 at which one or more values are presented in respective fields in a graphical user interface. The term "value" here may be taken to incorporate any data that may be defined in terms susceptible of processing in an information handling system, including digital, binary or alphanumeric values of any length or precision, and of graphical representation. The values may be presented as direct representations of the underlying values in alphanumeric form. The direct representations of the underlying values in alphanumeric form may take the native data format used in the underlying data processing system, or may be subjected to a translation into a format more convenient for a human reader, for example converting ASCII codes into characters, date serial number into a calendar date, and the like. Representations of the underlying values in alphanumeric form may also take the form of abstract or figurative graphical representations of the underlying data. In some cases the data may natively constitute image data, for example from photographic or other graphical material, or may be converted into a graphical representation for example as a bar code, data plot, and so on.

The field may be any region in a user interface capable of displaying different values under programmatic control. The fields may be of different size and or shape, and may be arranged in any relative disposition. The graphical user interface itself may be two or three dimensional, and within a three dimensional user interface the fields may be two or three dimensional, or a mixture of both. Certain features may be distributed across a plurality of interfaces.

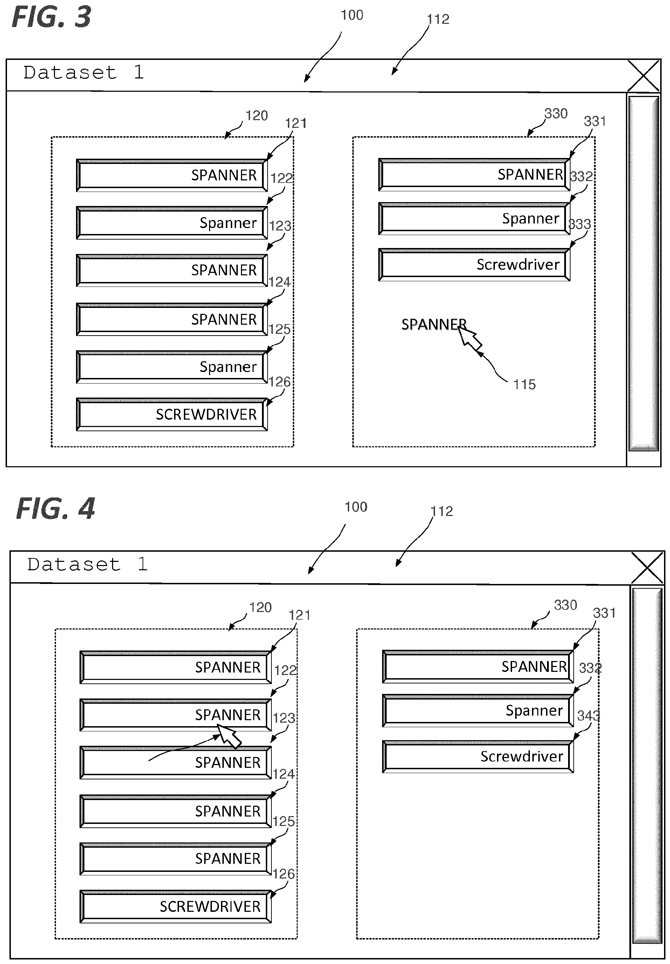

Figure 3 shows one example of elements of a graphical user interface showing elements of certain embodiments in a first phase. The graphical user interface of figure 3 is similar to that of figure 1, and comprises the window 110 with editing pane 111, title bar 112, slider bar 113 and pointer 115 as described above. The editing pane 111 displays a set 120 of fields 121, 122, 123, 124, 125, 126. As shown, the fields 121, 122, 123, 124, 125, 126 comprise the respective data strings "SPANNER", "Spanner", "SPANNER", "SPANNER", "Spanner", "SCREWDRIVER". As such, to this extent figure 3 shows one example of the results that may be achieved after the first step of the method of figure 2 as described above, with one or more values ("SPANNER", "Spanner", "SPANNER", "SPANNER", "Spanner", "SCREWDRIVER") presented in respective fields 121, 122, 123, 124, 125, 126 in a graphical user interface 110.

The method of figure 2 next proceeds to step 210 at which a set of representative string values in the first set are identified.

In certain embodiments, the set of representative values corresponds to a surjection function of the first set. In other words, every value in the first set has a corresponding value in the second set. The representative values are selected on the basis of a predefined selection criterion. The selection criteria may be fixed or programmatically determined, or defined based on user input on the basis of selection from filters or otherwise, or with reference to a Regular Expression or the like, in which case there may be provided an additional step (not shown) of receiving a definition of the representative values.

One value in the second set may in some other embodiments correspond to many values in the first set (a non-injective surjection). It will be appreciated that not all displayed values need necessarily be processed in accordance with step 210- certain values may be excluded as not susceptible to processing.

One example of a selection criterion would define all unique values in the first set.

Once the representative values have been defined, each said representative value is presented to a user in a respective further field in a graphical user interface at step 215. For example, as shown in figure 3 the selection criterion is, by way of example, that the representative values should comprise all unique values present in the first set, and accordingly the unique values "SPANNER", "Spanner" and "Screwdriver" are presented in further fields 331, 332 and 333 respectively.

The method of figure 2 next proceeds to step 220 at which user input is received with respect to a selected one of the further fields corresponding to a representative value.

As shown in figure 3, the user has selected the first unique value "SPANNER" present in the first further field 331 using the mouse pointer 115, and dragged the selected unique value towards the first set of values 120.

Figure 4 shows one example of elements of a graphical user interface showing elements of certain embodiments in a second phase. The graphical user interface of figure 4 is similar to that of figures 1 and 3.

As shown, subsequently to selecting the first unique value "SPANNER" present in the first further field 331 using the mouse pointer 115, and dragging the selected unique value towards the first set of values 120, the user has released the unique value "SPANNER" over the field 122 displaying the value "Spanner".

Returning to the method of figure 2, the method now proceeds to step 225 of modifying the respective field associated with each value corresponding to the representative value associated with said selected further fields so as to apply a modification defined by the user input thereto.

As shown in figure 4, the release of the first representative value over one of the values in the first set is interpreted as indicating that values in the first set selected by the location of the drop action are to be replaced with the value of the second set selected by the location of the click-drag action. As such, the value "Spanner" in the field 122 has been replaced with the selected value from the second list "SPANNER", as has the value in field 125, which was not directly selected by user interaction, but as shown in figure 3 contained the same value "Spanner" and as such has been automatically replaced.

Alternatively, the first representative value may be dragged and dropped over another field of the second set, which may be interpreted as indicating that all values in the first set having values corresponding to the value selected in the second set by the location of the drop action are to be replaced with the value of the second set selected by the location of the click-drag action. On this basis, by dropping the value "SPANNER" from field 332 over the field "Spanner" in the field 332, the same effect of replacing the value "Spanner" in fields 123 and 125 with the selected value from the second list "SPANNER" is achieved.

In any case, the second set may optionally be updated to reflect the fact that in this embodiment on the basis of the described interactions the value "Spanner" no longer exists in the first set, and as such may no longer belong to the second set depending on the defined selection criteria.

In other words, the modification may comprise modifying the presentation of each respective field associated with each of the plurality of values corresponding to the representative value associated with the selected one of the further fields.

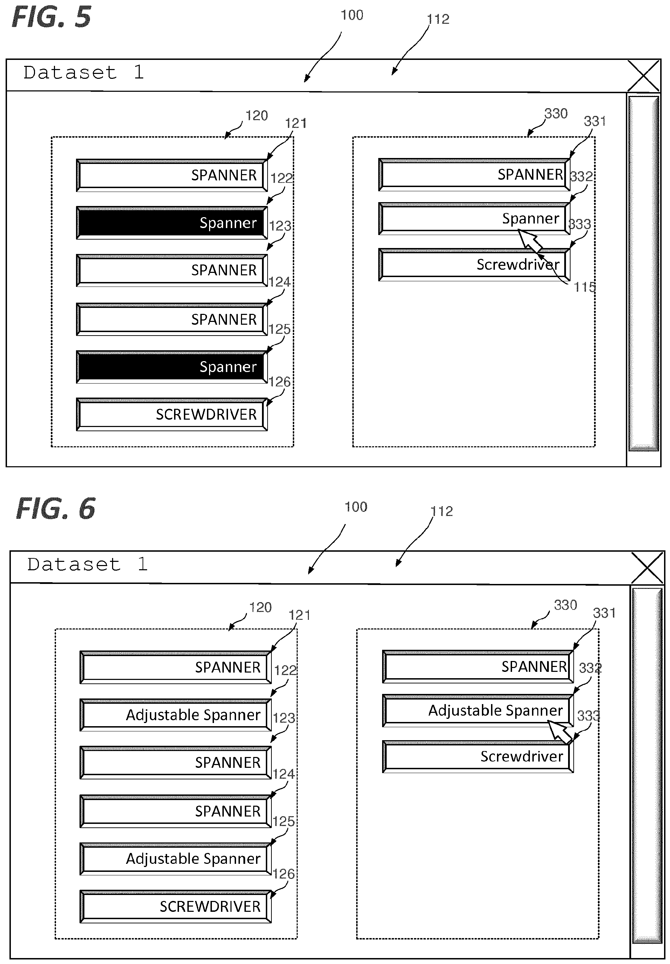

Figure 5 shows one example of elements of a graphical user interface showing elements of certain further embodiments in a second phase. In this illustrative example, the graphical user interface of figure 5 is similar to that of figures 1 and 3.

As shown, the user has provided input with respect to a selected further field 332 at step 220 as described above by selecting field 332, for example by clicking on the relevant part of the interface with the mouse pointer 115, as a result of which at step 225 the respective fields 122, 125 associated with each of the values corresponding to the representative value "Spanner" associated with the selected further field 332 have been modified so as to apply a modification defined by said user input thereto. Specifically, the mere selection of the further field 332 is deemed to constitute the definition by the user of a requirement to highlight the fields corresponding to the selected representative value, and the fields 122 and 125 are highlighted accordingly. As shown the fields 122 and 125 are highlighted by inverting the shading of the fields, however it will be appreciated that many other methods for highlighting a field will readily occur to the skilled person. For example, the fields may be animated to flash or blink, the colour of the text and/or the field may be changed to a contrasting or brighter colour, the size of the field, and/or the weight of its outlines or text, and so on. As such the modification may comprise highlighting each respective field associated with each of the values in said first set corresponding to the representative value associated with the selected one of said further fields. This may serve the purpose of making more readily visible any changes to the values in the first set of values, by highlighting the fields that have changed, or where no change is specified to the values themselves, by conveniently identifying all fields containing a particular value.

Figure 6 shows one example of elements of a graphical user interface showing elements of certain further embodiments in a second phase. The graphical user interface of figure 6 is similar to that of figures 1 and 3.

In certain embodiments the user input may specify a modification to the representative value associated with the selected one of said further fields. For example, the user might select the field 332 and amend its contents to read "Adjustable Spanner". On this basis, at the step of modifying 225 as described above, each respective value in the plurality of values corresponding to said selected representative value ("Spanner") in the first set would be updated to apply the modification defined by said user input thereto, so as to replace each corresponding value in the first set with the value "Adjustable Spanner". As such the described mechanism may be used not only to replace one representative value with another, but to redefine a representative value and thereby all corresponding values in the first set.

As shown, the user has provided input with respect to a selected further field 332 at step 220 by selecting field 332 for example by clicking on the relevant part of the interface with the mouse pointer 115, and editing the text in field 332 to read "Adjustable Spanner" as a result of which at step 225 the respective fields 122, 125 associated with each of the values corresponding to the representative value "Spanner" associated with the selected further field 332 have been modified so as to apply a modification defined by said user input thereto. Specifically, the editing of the text in field 332 is deemed to constitute the definition by the user of a requirement to modify the fields corresponding to the selected representative value, so as to replace their values with the newly edited value provided by the user input at field 332. And as shown, the fields 122 and 125 are modified accordingly.

The user input may accordingly comprise entering a new value to replace the selected representative value, the modification comprising replacing each value in said plurality of values corresponding to the elected representative value with the new value.

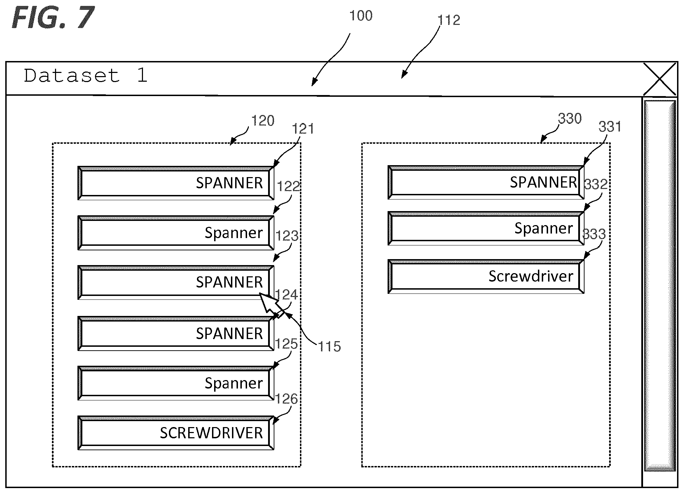

Figure 7 shows one example of elements of a graphical user interface showing elements of certain further embodiments in a first phase. The graphical user interface of figure 7 is similar to that of figures 1 and 3.

In certain embodiments, the step 220 of receiving user input with respect to a selected one of the further fields, may comprise the user selecting a further value visible in a graphical user interface to replace the selected representative value in a user display.

As shown, the selected further value is one of the values of the first set of values, displayed in the field 124, however it might be any other value visible in the user interface. For example, further fields may be providing standard or common values for possible use.

Once the further value is selected, it is associated with the selected value, in this case the value "Spanner" presented in the field 332, by means of a user interface feature. Specifically, as shown a drag and drop interface feature may be used to move the value "SPANNER" from the field 123 to the field 332.

In accordance with the embodiment of figure 7, the modification of step 225 then comprises replacing each value in the plurality of values corresponding to the selected representative value of field 332 with the further value "SPANNER". On this basis at the step of modifying 225 as described above each respective value in the plurality of values corresponding to the selected representative value ("Spanner") in the first set would be updated to apply the modification defined by said user input thereto, so as to replace each corresponding value in the first set with the value "SPANNER". As such the described mechanism may be used not only to replace one representative value with another, but to redefine a representative value form another existing value and thereby all corresponding values in the first set.

The results of this mechanism would thus be identical to those shown in figure 4 as presented above, albeit arrived at by a different set of interactions.

It will be appreciated that the different mechanisms described can be combined. For example the fields corresponding to the selected representative value may be highlighted as described with reference to figure 5, regardless of the mechanism used for the provision of the user input at step 220, and any other modifications to the fields in response to that input, for example on the basis of the mechanisms of figures 3, 4, 6 or 7.

It will also be appreciated that any or all of these mechanisms may be supported in the same interface, giving the user the option of modifying the fields on the basis of any of the described mechanisms, or any other mechanism falling within the scope of the appended claims.

The embodiments of figures 3, 4, 6 and 7 have been described for the sake of simplicity in the context of a set of discrete fields in an application specific window interface, as introduced in the context of the presentation of figure 1 above. It will be appreciated that the present invention is applicable in many other interface contexts. For example, the respective fields in which the one or more values are presented and/or the respective further fields in a graphical user interface in which the representative values are presented may be cells of a spreadsheet. The respective fields in which the one or more values are presented and/or the respective further fields in a graphical user interface in which the representative values are presented may be cells of a pivot table.

It will be appreciated the different fields either containing the values, or the representative values need not appear in the same window, or in the same application, or indeed be presented on the same display, or be of the same type ; embodiments might encompass the possibility of the representative values being presented in one window, and the values in another.

Although the fields of figures 3, 4, 6 or 7 are arranged as columns, it will be appreciated that any layout may be adopted. Furthermore, the layout of the two sets of fields 120 and 330 may differ, for example, the first set of fields might comprise a two dimensional matrix of fields, whilst the second set might retain a one dimensional list structure.

In certain embodiments, the representative values may be subjected to additional processing prior to the step 215 of presenting them to a user. For example, they may be sorted in alphabetical or numerical order prior to display, or filtered or sorted in any other manner as may be appropriate to a particular application. Filtering and/or sorting parameters may be set automatically by default or by the user.

It may be noted that after the step 225 of figure 2, a dotted line shows the process returning to step 210. On this basis, it may be understood that the flow described above may be repeated iteratively, with the set of representative values being updated continually as the values on which they are based are modified at step 225. Still further, other modifications to the values, or to the representative values by conventional editing mechanisms, or other user operations such as loading new files and the like, may also trigger new iterations. As such, there may be provided a further step of receiving a modification to the dataset, wherein on receiving the modification the steps of identifying each unique value in said dataset and presenting said unique values to a user are repeated.

This interaction advantageously provides a convenient mechanism for improving the coherence of data in the first set, by identifying anomalous entries, and easily replacing such anomalies with the approved format.

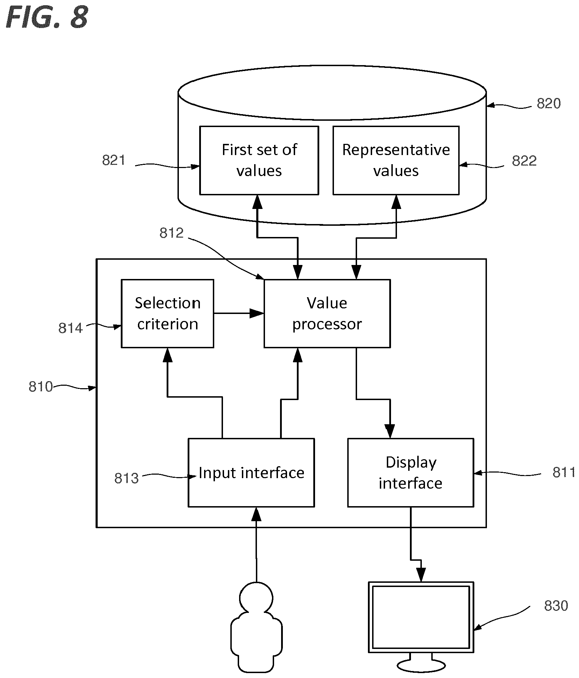

Figure 8 presents an apparatus for editing a first set of values in accordance with an embodiment.

As shown, the apparatus comprises a display interface 811 in communication with a display 830, and adapted under instruction from a Value processor 812 to cause the display 830 to present one or more values 821 in respective fields in a graphical user interface. As shown, by way of example the first set of values 821 are retrieved by the value processor 812 from a database 820.

The value processor 812 is further adapted to identify a set of representative values 822 in said first set of values 821, where said set of representative values 822 correspond to a non injective surjection function of said first set 821, and wherein said value processor 812 is further adapted to select the representative values 822 on the basis of a predefined selection criterion 814. As shown, the selection criterion 814 is defined by the user via the input interface 813. As shown, by way of example the set of representative values 821 are written to the database 820, for later retrieval.

The value processor 812 is further adapted to provide the representative values to the display interface for presentation to a user in a respective further field in a graphical user interface.

The input interface 813 is further adapted to receive user input with respect to a selected one of the further fields corresponding to a respective representative value, and to provide this input to said value processor 812, the value processor 812 being further adapted to modify the respective fields associated with each of the plurality of values in the first set 821 corresponding to the representative value associated with said selected one of said further fields so as to apply a modification defined by the user input thereto, for display by the display Interface 811.

As such, according to certain embodiments, values in a graphical interface such as a spreadsheet can be manipulated indirectly by means of a feature whereby representative values, such as unique values are identified and presented separately. Manipulations of these representative values are then passed on to the corresponding original values.

Software embodiments include but are not limited to applications, firmware, resident software, microcode, etc. The invention can take the form of a computer program product accessible from a computer-usable or computer-readable medium providing program code for use by or in connection with a computer or an instruction execution system.

A computer-usable or computer-readable can be any apparatus that can contain, store, communicate, propagate, or transport the program for use by or in connection with the instruction execution system, apparatus, or device. The medium can be an electronic, magnetic, optical, electromagnetic, infrared, or semiconductor system (or apparatus or device) or a propagation medium.

In some embodiments, the methods and processes described herein may be implemented in whole or part by a user device. These methods and processes may be implemented by computer-application programs or services, an application-programming interface (API), a library, and/or other computer-program product, or any combination of such entities.

The user device may be a mobile device such as a smart phone or tablet, a drone, a computer or any other device with processing capability, such as a robot or other connected device, including loT (Internet of Things) devices.

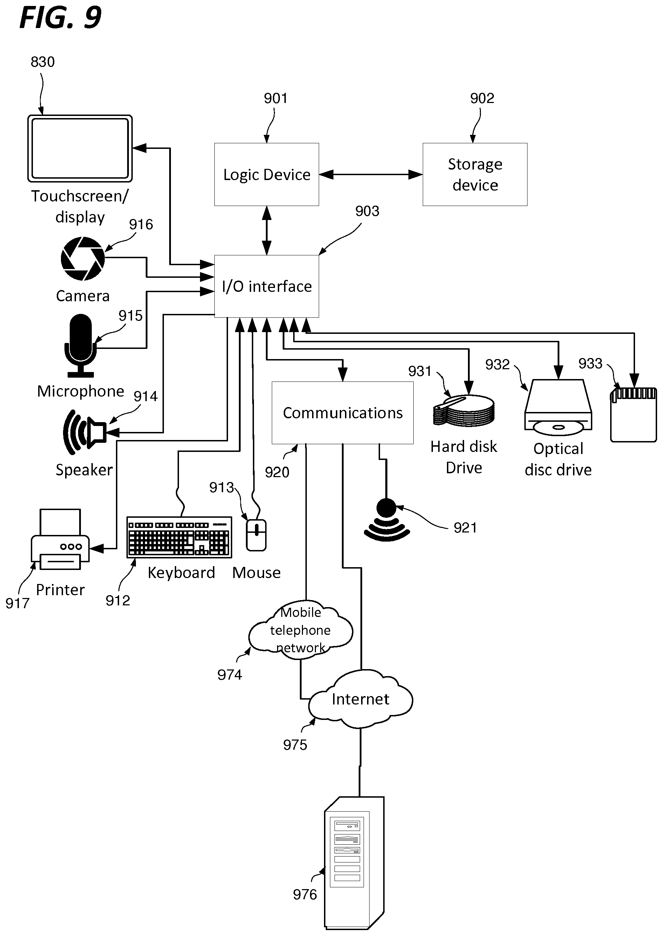

Figure 9 shows a generic computing system suitable for implementation of embodiments of the invention.

A shown in figure 9, a system includes a logic device 901 and a storage device 902. The system may optionally include a display subsystem 830, input/output subsystem 903, communication subsystem 920, and/or other components not shown.

Logic device 901 includes one or more physical devices configured to execute instructions.

Storage device 902 includes one or more physical devices configured to hold instructions executable by the logic device to implement the methods and processes described herein. When such methods and processes are implemented, the state of storage 902 device may be transformed - e.g., to hold different data.

In particular, the system of figure 9 may be used to implement embodiments of the invention.

For example a program implementing the steps described with respect to figure 2, or the algorithms presented above may be stored in storage device 902 and executed by logic device 901. The functions of any or all of the of the units 811, 812, 813 or 814 may similarly be implemented by a program performing the required functions, in communication with additional dedicated hardware units as necessary, and the first set of values 821 and/or representative values 822 may be stored in storage device 902. The display 830 may display when included, display subsystem 830 may be used to present one or more graphical user interface (GUI) features, by means of which the set of representative values for presentation to a user in a respective further field in a graphical user interface may be presented as discussed above.

As the herein described methods and processes change the data held by the storage device 902, and thus transform the state of the storage device 902, the state of display subsystem 830 may likewise be transformed to visually represent changes in the underlying data. Display subsystem 830 may include one or more display devices utilizing virtually any type of technology for example as discussed above. Such display devices may be combined with logic device and/or storage device in a shared enclosure, or such display devices may be peripheral display devices. An audio output such as speaker 914 may also be provided.

When included, input subsystem may comprise or interface with one or more user-input devices such as a keyboard 912, mouse 913, touch screen, or game controller (not shown). In some embodiments, the input subsystem may comprise or interface with selected natural user input (NUI) componentry. These elements may be adapted to receive user input with respect to a selected one of said further fields corresponding to a respective representative value, and to provide this user input to said value processor as discussed above.

The system of figure 9 is intended to reflect a broad range of different types of information handling system. It will be appreciated that many of the subsystems and features described with respect to figure 9 are not required for implementation of the invention, but are included to reflect possible systems in accordance with the present invention. It will be appreciated that system architectures vary widely, and the relationship between the different sub-systems of figure 9 is merely schematic, and is likely to vary in terms of layout and the distribution of roles in systems. It will be appreciated that, in practice, systems are likely to incorporate different subsets of the various features and subsystems described with respect to figure 9.

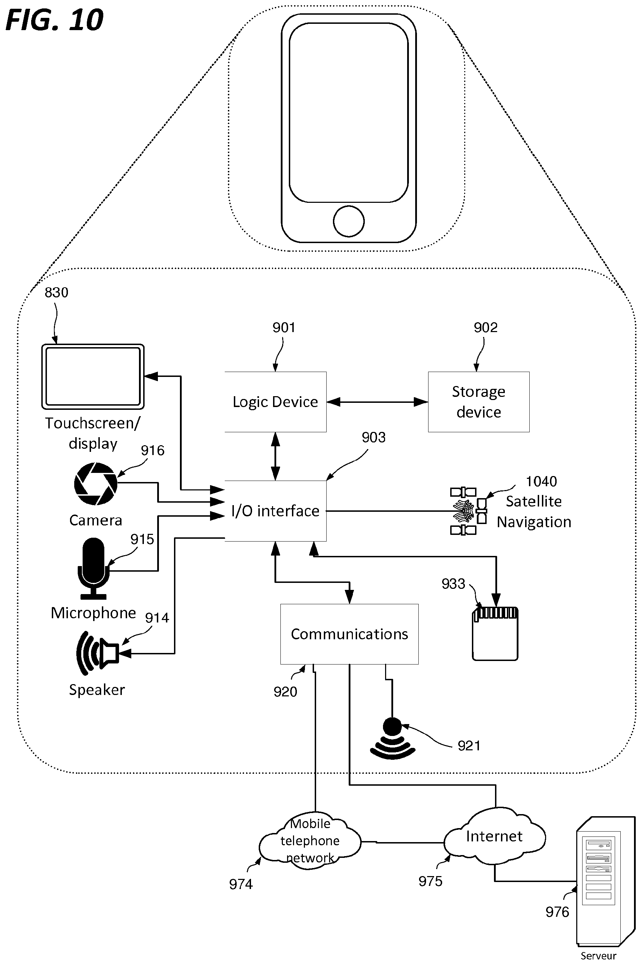

Figure 10 shows a smartphone device adaptable to constitute an embodiment. As shown in figure 10, the smartphone device incorporates elements 901, 902, 903, 920, optional near field communications interface 921, flash memory 933 and elements 914, 915, 916, and 830 as described above. It additionally comprises Global Navigation Satellite System (GNSS) interface 1040. It is in communication with the telephone network 974 and a server 976 via the network 975. Alternative communication mechanisms such as a dedicated network or Wi-Fi may also be used. The features disclosed in this figure may also be included within a tablet device as well.

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

The subject matter of the present disclosure includes all novel and non-obvious combinations and sub-combinations of the various processes, systems and configurations, and other features, functions, acts, and/or properties disclosed herein, as well as any and all equivalents thereof.

## Claims

1. A method of editing a first set of values, said method comprising the steps of:
presenting one or more said values in respective fields in a graphical user interface, identifying a set of representative values in said first set, said set of representative values corresponding to a surjection function of said first set, and where said representative values are selected on the basis of one or more predefined selection criteria,
presenting each said representative value to a user in a respective further field in a graphical user interface,
receiving user input with respect to a selected one of said further fields corresponding to a respective representative value, and
modifying said respective field associated with each of said plurality of values corresponding to the representative value associated with said selected one of said further fields so as to apply a modification defined by said user input thereto.

2. The method of claim 1 wherein the modification comprises modifying the presentation of each respective field associated with each plurality of values corresponding to the representative value associated with said selected one of said further fields.

3. The method of claim 2 wherein said modification comprises highlighting each respective field associated with each plurality of values in first set corresponding to said representative value associated with said selected one of said further fields.

4. The method of claim 1 wherein user input specifies a modification to the representative value associated with said selected one of said further fields, and wherein said step of modifying comprises modifying each said respective value in said corresponding plurality of values corresponding to said selected representative value so as to apply the modification defined by said user input thereto.

5. The method of claim 4 wherein said user input comprises entering a new value to replace said selected representative value, and whereby said modification comprises replacing each value in said plurality of values corresponding to said elected representative value with said new value.

6. The method of claim 4 wherein said user input comprises selecting a further value visible in a graphical user interface to replace said selected representative value in a user display, and associating said further value with said selected value by means of a user interface feature, and whereby said modification comprises replacing each value in said plurality of values corresponding to said selected representative value with said further value.

7. The method of claim 6 wherein said user interface feature comprising a drag and drop feature, whereby the further value is dragged to the vicinity of the selected representative value.

8. The method of any of claims 1 to 7 wherein said respective fields in a graphical user interface in which said one or more values are presented, or said respective further fields in a graphical user interface in which said representative values are presented are cells of a spreadsheet.

9. The method of any of claims 1 to 8 wherein said respective fields in a graphical user interface in which said one or more values are presented, or said respective further fields in a graphical user interface in which said representative values are presented are cells of a pivot table.

10. The method of any of claims 1 to 9 comprising the further step of receiving a modification to said dataset, wherein on receiving said modification said steps of Identifying each unique value in said dataset and presenting said unique values to a user are repeated.

11. The method of any of claims 1 to 10 wherein said values are direct representations of underlying data values in alphanumeric form.

12. The method of any of claims 1 to 11 wherein said values are abstract or figurative graphical representations of the underlying data values.

13. An apparatus for editing a first set of values, said apparatus comprising an input interface, a value processor and a display interface in communication with a display, said display interface adapted under instruction from said value processor to cause the display to present one or more said values in respective fields in a graphical user interface,
the value processor being adapted to identify a set of representative values in said first set of values, where said set of representative values corresponds to a non injective surjection function of said first set of values, and wherein said value processor is further adapted to select the representative values on the basis of one or more predefined selection criteria, and to provide said representative values to the display interface for presentation to a user in a respective further field in a graphical user interface, and wherein said input interface is adapted to receive user input with respect to a selected one of said further fields corresponding to a respective representative value, and to provide this user input to said value processor, said value processor being further adapted to modify the respective fields associated with each of the plurality of values in the first set corresponding to the representative value associated with said selected one of said further fields so as to apply a modification defined by the user input thereto, for display by the display Interface.

14. A computer program comprising instructions adapted to implement the steps of any of claims 1 to 12.
